# EUROPEAN PATENT SPECIFICATION

(11) **EP 4 271 636 B1**
(45) Date of publication and mention of the grant of the patent: **30.10.2024**
(21) Application number: 21843779.6
(22) Date of filing: 23.12.2021
(51) Int. Cl.: B65H 67/06

(54) **AUTOMATIC THREAD REEL READING DEVICE WITH RFID TAG, RELATED SYSTEM AND TRACKING METHOD**
AUTOMATISCHE GARNSPULENLESEVORRICHTUNG MIT RFID-ETIKETT, ZUGEHÖRIGES SYSTEM UND VERFOLGUNGSVERFAHREN
DISPOSITIF DE LECTURE AUTOMATIQUE DE BOBINE DE FIL À ÉTIQUETTE RFID, SYSTÈME ASSOCIÉ ET PROCÉDÉ DE SUIVI

(30) Priority: 30.12.2020 IT 202000032810
(43) Date of publication of application: 08.11.2023
(73) Proprietor: THEMA 2 S.R.L., 46024 Moglia (MN) (IT)
(72) Inventor: MICHELINI, Claudio, 46024 Moglia, Mantova (IT)
(74) Representative: Gualeni, Nadia
(86) International application number: PCT/IB2021/062243
(87) International publication number: WO 2022/144717

(56) References cited:
- EP-A1- 2 979 676
- WO-A1-2009/131047
- WO-A1-2013/183998

## Description

The subject of this invention is an automatic system for tracking a reel of textile thread and a related method for automatically tracking the reel of thread using said system.

Even in the textile industry, due to the growing quality demands of the market, it has long been necessary to be able to provide the total traceability of the product, i.e., the ability to reconstruct the history of the finished textile product, whichever sector it refers to: clothing, home furnishings, automotive, etc., up to the origin of all the threads with which it was manufactured. The thread used is in turn the result of various steps and processes that together contribute to defining the quality features of the finished product.

In industrial production, the thread is wound onto a tube to form a reel using a machine called a winding machine. Essential in an industrial system is the automation of the process of moving the reels from the winding machine to the subsequent stages, such as the sorting line, the warehouse, or palletizing. In order to carry out these activities, the automatic handling systems include a machine called a "doffer" which is suitable to pick up the prepared reels of thread from the winders and transport them to the next station. For technical reasons, reels of thread must be able to be tracked and distinguished according to the production machine, production lot, and other quality-related parameters.

Currently, this tracking is done manually. The tube inside the reel is often made of cardboard, which provides a number of advantages such as low cost, good temperature resistance, the possibility of marking with symbols and colors and the ease of affixing tags therein.

In order to trace the path of the reels of thread, the most commonly used technology today involves the use of identification codes with graphic elements, such as a QR code or a bar code, applied internally to the tubes by directly marking the identification code or gluing on a tag containing said code.

However, this system still has some drawbacks: not only does it require the addition of a labeling station, but it also forces operators to use identification code recognition tools, which are sometimes difficult to locate inside the tube. For the same reason, automating the recognition of these tags is complex.

In order to have more and more automated and centrally controlled plants, it is necessary to be able to track the reels of thread automatically right from the start, i.e., from their exit from the winding machine.

An automatic reading device for tracking reels of thread with a tube provided with an RFID label according to the preamble of claim 1 is disclosed in WO 2013/183998 A1 and in WO 2009/131047 A1.

The object of this invention is to solve problems associated with conventional thread reel tracking systems.

In particular, the object of this invention is to provide a system capable of fully automatic tracking of the reel of thread, immediately when it exits the winding machine.

This object is achieved by an automatic reading device for tracking reels of thread according to claim 1, a thread reel handling machine according to claim 5, an automatic thread reel tracking system according to claim 6, and an automatic thread reel tracking method according to claim 7. The dependent claims describe preferred embodiments of the invention.

The features and advantages of the device according to this invention will appear more clearly from the following description, made by way of an indicative and non-limiting example with reference to the accompanying figures, wherein:
- Fig. 1 shows an axonometric view of a reel of thread 1;
- Fig. 2 shows an axonometric view of the automatic reading device 100 according to this invention, in particular an exploded view of the antenna 101 connected via the connection cable 105 to the electronic apparatus 104;
- Fig. 3 shows the automatic reading device 100 of Fig. 2, wherein the casing of the electronic apparatus 104 has been partially removed;
- Fig. 4 shows a side view of a component of an automatic thread reel tracking machine 1 according to this invention, in particular of a reel handling support 2 having an automatic reading device 100 at the tip;
- Fig. 5 shows an exploded view of the tip of the reel handling support in Fig. 4;
- Fig. 6 shows a longitudinal sectional view of the tip of the reel handling support in Fig. 4;
- Fig. 7 shows an axonometric view of the tip of the reel handling support in Fig. 4, after removal of the outer cover;
- Fig. 8 shows a working diagram of the automation cycle for the automatic tracking of the reels of thread being loaded onto the reel handling support.

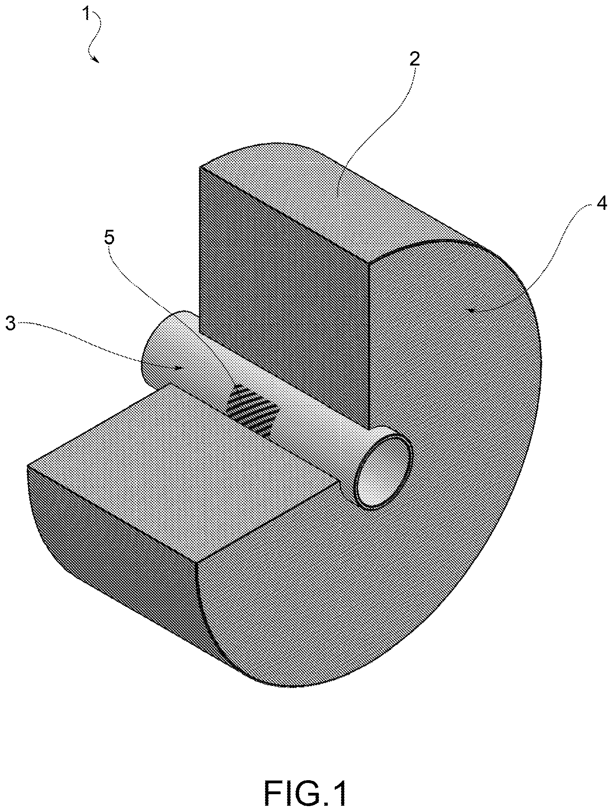

With reference to the above figures, in particular Fig. 1, some definitions useful for understanding the invention are given below.

Tube 3: cylinder on which thread is wound to form a reel of thread 1; often made of plastics or cardboard.

Reel of thread 1: is obtained by winding a thread accompanying it over a tube 3, maintaining a cylindrical symmetry. For mechanical-textile reasons, the reel of thread 1 may have different profiles depending on the physical-chemical nature of the thread collected.

RFID (Radio Frequency Identification): is the technology of automatic identification based on the propagation of electro-magnetic waves in the air, allowing the unambiguous, automatic (hands-free), massive and remote detection of objects, animals, and people both when static and in movement.

RFID TAG 5: also called a transponder or smart tag; its main component is a small silicon chip surrounded by an antenna, normally made of copper, to which it is connected and from which it receives the energy needed to operate when it is hit by an electromagnetic field of the appropriate frequency.

In summary therefore, as shown in Fig. 1, the reel of thread 1 comprises a tube 3 within which a tag 5 with RFID is affixed, allowing for unique identification of the tube 3 and thus the reel of thread 1.

In an example embodiment, the tag 5 (RFID TAG) is a unidirectional type, i.e., it may be read/written according to a specific orientation with respect to the antenna. The optimal position for the tag 5 is in the central band of the tube, so that it is as far away as possible from the tags 5 on neighboring tubes. However, this is not essential; the system is designed to work regardless. If the tag 5 is unidirectional, then the orientation must be defined; if the tag 5 is omnidirectional then the orientation does not affect the reading/writing of the tag.

In a further example embodiment, the tag 5 (RFID TAG) is of the omnidirectional type, i.e., it may be read/written regardless of the orientation of its plane with respect to the antenna. Advantageously, such a solution allows the RFID tag 5 to be attached in any position within the tube 3 and in any orientation.

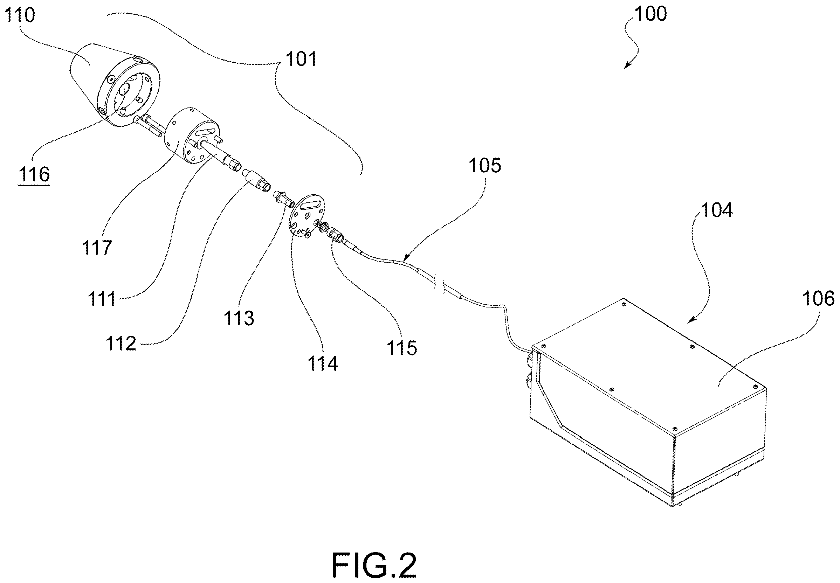

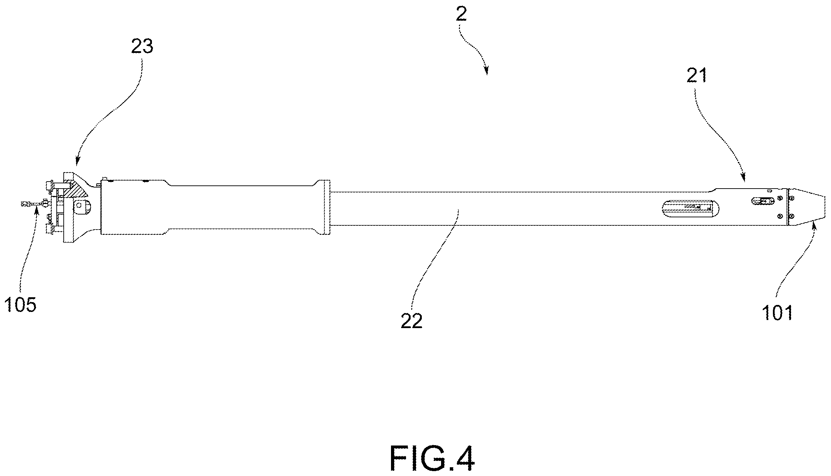

A subject of this invention is an automatic tracking system comprising an automatic reading device 100, shown in Fig. 2 and 4, and a plurality of tubes 3 having RFID tags 5, as in Fig. 1.

The automatic reading device 100 comprises an antenna 101, connected via a connection cable 105 to a reader 102 connected to an electronic system 103.

The antenna 101 converses with the antenna of the RFID tag 5 by means of radio waves.
Preferably, the antenna 101 is of the coaxial type, i.e., capable of receiving and emitting signals 360° in a plane. Advantageously, such a solution, combined with the use of an omnidirectional RFID tag 5, ensures the certainty of reading the RFID tag 5 within a tube 3, and thus the certainty of tracking the reel of thread 1.

The reader 102 is suitable on the one hand to exchange information with the RFID tag 5 by means of the antenna 101, and on the other hand to interact with the electronic system 103 to which it is connected.
Thus, the reader 102 has the function of managing the antenna 101 that transmits and receives the radio frequency signals.

The electronic system 103 comprises a central processing unit (CPU) suitable to manage the sending of data read by the reader 102 to at least one programmable logic controller (PLC) and/or at least one computer via industrial serial protocols.

The reader 102 and the electronic system 103 to which it is connected are housed within an electronic apparatus 104, provided with a casing 106, which may be easily positioned in a workstation of the textile plant, for example on the "doffer" machinery which is adapted to pick up the reels of thread 1 from the winders and transport them to the next station.

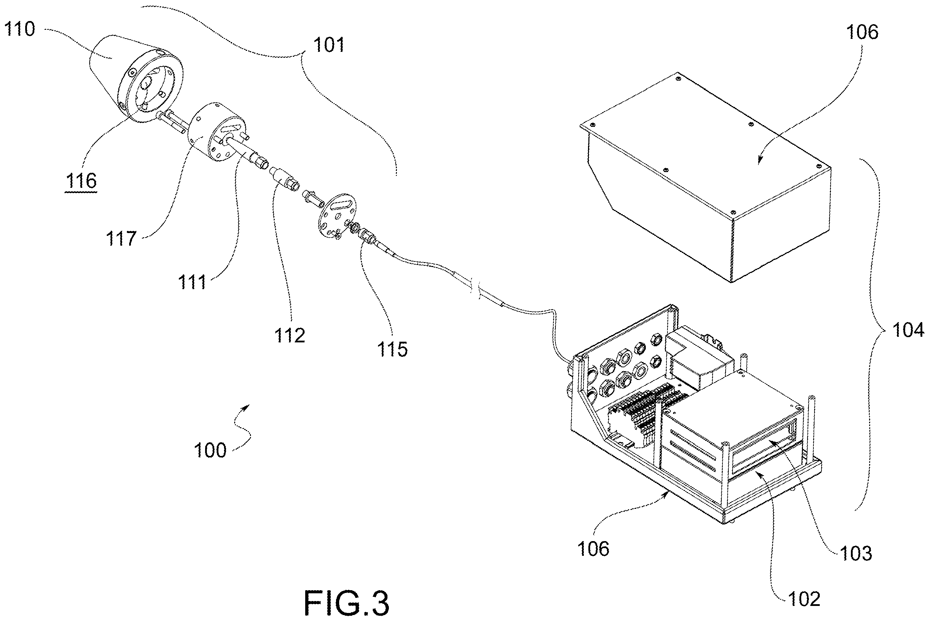

The antenna 101 is shown specifically in Fig. 2 and 3.
The antenna 101 comprises a head 110 within which a seat 116 is made in which an antenna body 111 is housed, which is suitable to read/write to the RFID tag 5 by means of radio waves.

Preferably, the seat 116 wherein the antenna body 111 is housed flows into a front opening 119.

Preferably, the head 110 is made of a non-shielding material, i.e., a material that does not interfere with electromagnetic fields, such as a plastics material.

Preferably, the head 110 has a frustoconical shape, with a smaller diameter toward the terminal end.

The head 110 is closed at the rear by a bushing 117 that also closes the seat 116 wherein the antenna body 111 is contained.

A screen 114 is arranged to the rear of the bushing 117. Preferably, the screen 114 is made of a shielding material, such as metal.

The antenna body 111 is connected at the rear to an attenuator 112 connected to an adapter 113 for the connection cable 105. Both the attenuator 112 and the adapter 113 are arranged within the bushing 117, which is closed at the rear by the screen 114.

Note that the adapter 113 protrudes from the screen 114.

The connection cable 105, which makes the data connection between the antenna 101 and the electronic apparatus 104 in which the reader 102 and the electronic system 103 are contained, comprises a connector 115 connectable to the adapter 113 of the antenna 101.

The automatic reading device 100 is characterized in that it comprises a reel handling support 2 having a tip 21, on which a plurality of reels of thread 1 are inserted in sequence, and in particular in that the tip 21 is the antenna 101.
The reel handling support 2 is thus provided with an antenna 101 at the tip 21.

Advantageously, the antenna 101 is designed to replace the tip of the reel handling support 2, so as not to compromise the proper operation of other standard electronic devices already on the support 2.

The reel handling support 2, shown in Fig. 4, comprises a reel handling support body 22 terminating on one side in a tip 21 through which the reels of thread 1 are loaded, and on the opposite side in a connection end 23 with the machine.

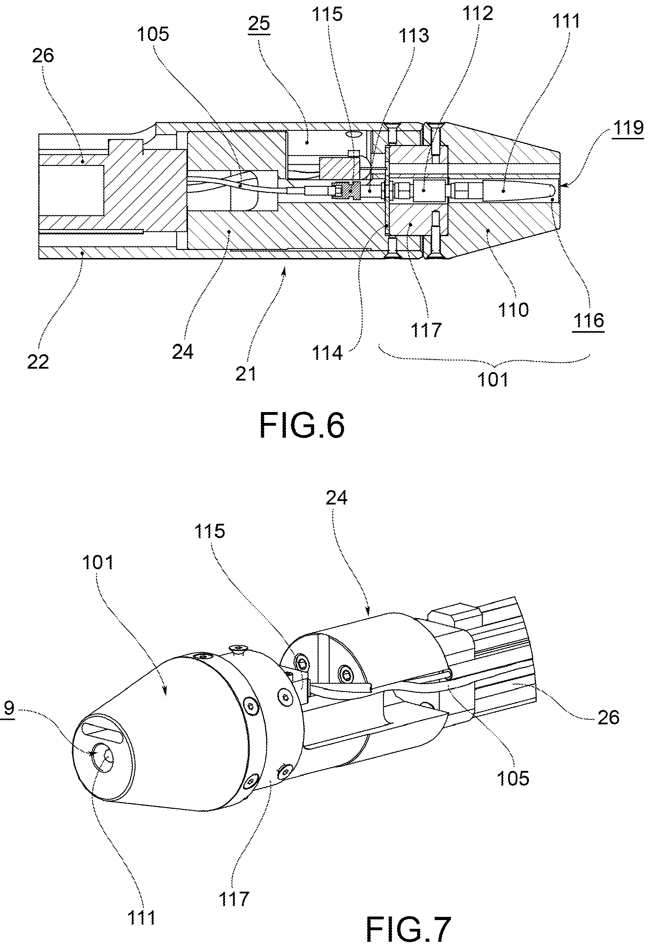

The hollow, circular-shaped reel handling support body 22 comprises, at the tip 21, an antenna seat 24 wherein the antenna 101 is at least partially inserted. For example, as in Fig. 6, the end portion of the antenna 101, namely the bushing 117 followed by the screen 114, is inserted into the antenna seat 24.

Preferably, the reel handling support body 22, at the tip 21, also houses within it a spacer 24 wherein the end portion of the connection cable 105 is housed, which has a connector 115 connectable to the adapter 113 of the antenna 101.

Preferably, the connection cable 105 runs internally to the reel handling support body 22 and exits from its connection end 23. Therefore, the electronic apparatus 104 of the automatic reading device 100 is arranged at the connection end 23 of the reel handling support 2.

Preferably, the connection cable 105 runs within a shielded tube, for example a metal tube, arranged within the reel handling support body 22.

Preferably, the reel handling support body 22 further accommodates reel pushing means 26 within it, for example in the form of a pneumatic cylinder.

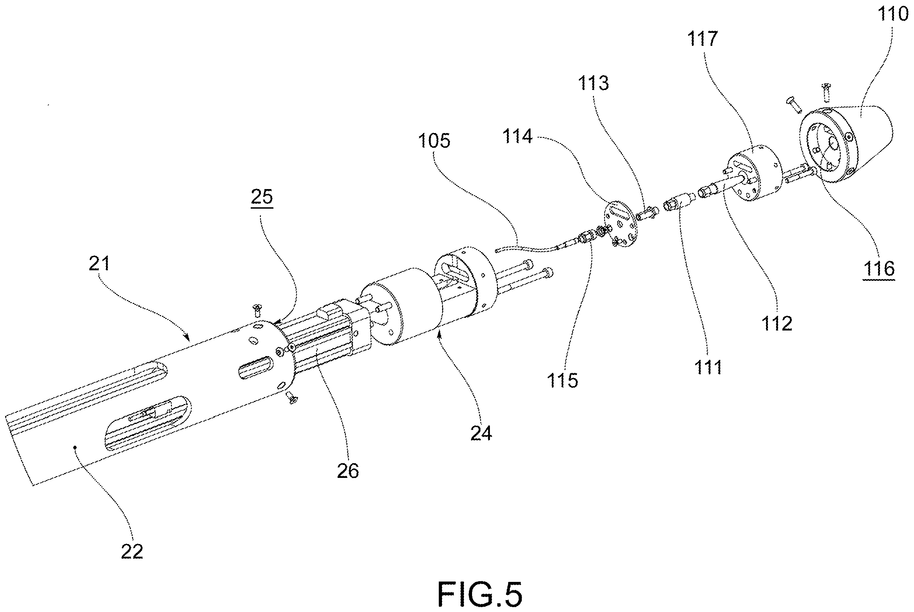

A subject of this invention is also a machine for handling the reels of thread 1, shown at least partially in Fig. 4 through 7. Said machine comprises a plurality of reel handling supports 2 on which a series of reels of thread 1 having an RFID tag 5 inserted inside the tube 3 are loaded in sequence, starting from the tip 21. In particular, each reel handling support 2 is provided with an antenna 101 at the tip 21.

In one example embodiment, the machine is a "doffer" for picking up reels of thread 1 from the winders and transporting them to the next station.

Advantageously, the automatic reading device 100 according to this invention is sized, positioned, and set to read/write one RFID tag 5 at a time when the machine picks up/releases reels of thread 1 equipped with tubes 3 with RFID tags 5, all in an environment where tens of reels of thread 1 are found within a few meters.

An important step in the proper operation of the automatic reading device 100 is setting the antenna 101. In effect, the tubes 3 of the reels of thread have a predetermined length and as a function thereof the transmission power of the antenna signal is regulated. In effect, the automatic reading device 100 must read/write only one RFID tag 5 at a time and must do so only during the loading/unloading of the thread reel on the reel handling support 2.

A subject of this invention is also to provide a method for automatically tracking reels of thread 1.

The method according to this invention comprises at least the following steps:
- providing at least one automatic reading device 100 as described above, i.e., having a reel handling support 2 with an antenna 101 at the tip 21;
- tracking each reel of thread 1 that is inserted onto the reel handling support 2 using a tracking algorithm.

The tracking algorithm allows the input order of the reels 1 to be recognized when they are inserted onto the reel handling support 2.

In particular, the tracking algorithm is performed by a computer and includes at least the following steps of the AUTOMATION CYCLE:
1. at the beginning of the loading of the reels of thread 1 onto the reel handling support 2, starting a counter that samples the pulses of a clock; the number of reels of thread to be loaded is known (n= number of reels expected);
2. when loading the reels of thread 1 that are inserted onto the reel handling support 2, sampling the readings from each RFID tag 5 by means of the antenna 110;
3. after loading the reels of thread 1 onto the reel handling support 2, switching off the counter;
4. dividing the clocks counted by the number of expected reels and consequently defining the bands corresponding to each reel of thread 1 loaded:
   a. first band -> first reel;
   b. second band -> second reel;
   ...
   n. nth band -> last reel expected.

OPTIMAL CONDITION: If the antenna 101 was set correctly, i.e., so that only one RFID tag 5 is read at a time, and if the RFID tags 5 were positioned correctly in the tubes 3 so that they are read one at a time, then there will be a unique match between:
a. first band -> first reel;
b. second band -> second reel;
...
n. nth band -> last reel expected.

IMPERFECT CONDITION: If the power of the antenna 101 was oversized or if two RFID tags 5 from two consecutive tubes 3 were placed close together, then the antenna 101 will simultaneously pick up the signal from two consecutive RFID tags 5 even if they are different.

Two corrective logics intervene in this condition:
a. acquisition order of the RFID tag 5;
b. clock interval in which the RFID tag is read.

FAILED OR MISSING RFID CONDITION: If the number of RFID tags 5 detected is less than the number of reels expected, and thus one or more RFID tags is faulty or missing, the software uses the clock interval as corrective logic to understand which is the missing tube in the a-n series.

A non-claimed embodiment provides a computer programmed to implement the automatic tracking method of the reel of thread 1 as described above.

A further non-claimed embodiment provides a computer program comprising portions of code that, when the program is executed on a computer, implement the method for automatically tracking the reel of thread 1 as described above.

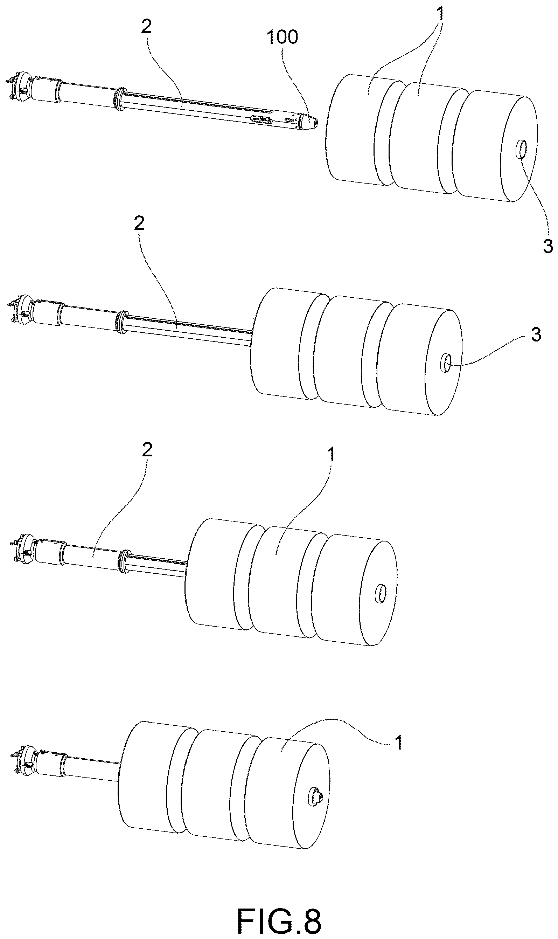

### Example (Fig. 8):

The software expects five reels of thread 1, and therefore five different RFID tag CODES, which by way of example shall be called STRING1, STRING2, STRINGS, STRING4, STRINGS.
RFID tag CODE TUBE 1: "STRING1"
RFID tag CODE TUBE 2: "STRING2"
RFID tag CODE TUBE 3: "STRINGS"
RFID tag CODE TUBE 4: "STRING4"
RFID tag CODE TUBE 5: "STRINGS"

The software does not know a priori the codes it is expecting, so it samples RFID tag readings at a set frequency.

| **OPERATION** | **SAMPLING** | **FAST COUNTER** | **CORRECT ORDER RECONSTRUCTION** |
|---|---|---|---|
| START SIGNAL | | COUNTER RESET | |
| | | 1 | TUBE 1 |
| TAG SAMPLE | -- | 2 | |
| | | 3 | |
| TAG SAMPLE | STRING1 | 4 | |
| | | 5 | |
| TAG SAMPLE | STRING1 | 6 | |
| | | 7 | |
| TAG SAMPLE | STRING1 | 8 | |
| | | 9 | |
| TAG SAMPLE | -- | 10 | |
| | | 11 | TUBE 2 |
| TAG SAMPLE | -- | 12 | |
| | | 13 | |
| TAG SAMPLE | -- | 14 | |
| | | 15 | |
| TAG SAMPLE | -- | 16 | |
| | | 17 | |
| TAG SAMPLE | STRING 2 | 18 | |
| | | 19 | |
| TAG SAMPLE | STRING2 | 20 | |
| | | 21 | IMPERFECT CONDITION: use of corrective logic |
| TAG SAMPLE | STRING2 | 22 | |
| | | 23 | |
| TAG SAMPLE | STRING2 - STRING3 | 24 | TUBE 3 |
| | | 25 | |
| TAG SAMPLE | STRING3 | 26 | |
| | | 27 | |
| TAG SAMPLE | -- | 28 | |
| | | 29 | |
| TAG SAMPLE | -- | 30 | |
| | | 31 | FAILURE OR MISSING RFID CONDITION: use of corrective logic |
| TAG SAMPLE | -- | 32 | |
| | | 33 | |
| TAG SAMPLE | -- | 34 | TUBE 4 |
| | | 35 | |
| TAG SAMPLE | -- | 36 | |
| | | 37 | |
| TAG SAMPLE | -- | 38 | |
| | | 39 | |
| TAG SAMPLE | -- | 40 | |
| | | 41 | TUBE 5 |
| TAG SAMPLE | -- | 42 | |
| | | 43 | |
| TAG SAMPLE | STRING5 | 44 | |
| | | 45 | |
| TAG SAMPLE | STRING5 | 46 | |
| | | 47 | |
| TAG SAMPLE | STRING5 | 48 | |
| | | 49 | |
| TAG SAMPLE | -- | 50 | |
| END SIGNAL | | | |

The sum of the clocks obtained at the end of the detection, and thus at the end of the movement of loading the reels of thread 1 onto the reel handling support 2, is divided by the expected number of tubes 3. In this way, virtual bands are obtained (in the example above, five bands with a value of 10 clocks) in each of which the system waits for the detection of an RFID tag to be read.

The algorithm reconstructs the correct order of the RFID tags read following the first reading of the UNIQUE CODE associated with the tag.

Having a counter allows for imperfect or missing tube conditions or other inconsistencies to be recognized; in the example table, the detection of the RFID tag associated with the fourth reel of thread was absent.

The tracking system according to this invention provides for a data exchange with the automation system. The on-board electronic system is designed to exchange data with standard industry protocols with the outside. In this way it is possible to connect a PC and/or a PLC, and therefore a DATABASE.

The tracking system according to this invention also provides for the possibility of writing on the RFID tag of the tube 3. In this way, it is possible to trace the path of the reel of thread 1 in a more complete way, for example by writing the date and time of production, the machine and position of origin, the rise in production, etc.

Innovatively, a device 100 for automatically tracing a reel of thread 1, the related machine, the related system, and the related automatic tracing method, make it possible to automate the tracing of the path of the reel of thread 1 in an industrial plant, and thus make it objective and rapid.

Advantageously, the system according to this invention allows the automation system to maintain high performance because the "doffer," equipped with a reel handling support with a device 100 for tracking, may;
- continue to collect multiple reels of thread 1 at a time without having to slow down;
- identify the RFID tag associated with the reel of thread 1 on the "doffer";
- recognize the order in which the reels enter the "doffer";
- allow data exchange with the system;
- allow data to be written to the RFID tag memory.

It is understood that a person skilled in the art could make modifications to the product described above, all of which are contained within the scope of protection as defined by the following claims.

## Claims

1. An automatic reading device (100) for tracking reels of thread (1) with a tube (3) provided with an RFID label (5), comprising:
- an antenna (101);
- a reader (102), connected to the antenna (101) by means of a connection cable (105), adapted to exchange information with an RFID label (5) by means of the antenna (101) ;
- an electronic system (103), connected to the reader (102), comprising a central processing unit;
- a reel handling support (2) provided with a tip (21) on which a plurality of reels of thread (1) with a tube (3) provided with an RFID label (5) may be inserted in sequence, and wherein the tip (21) is the antenna (101); **characterized in that** the antenna (101) comprises a head (110) provided with an internal seat (116) in which an antenna body (111) is accommodated, said seat (116) being closed at the rear by a screen (114).

2. An automatic reading device (100), according to claim 1, wherein the antenna (101) is coaxial, i.e., adapted to receive and emit signals at 360° on a plane.

3. An automatic reading device (100), according to claim 1 or 2, wherein the head (110) is made of a non-shielding material, for example, plastic material, and the screen (114) is made of a shielding material, for example, metal.

4. An automatic reading device (100), according to any one of the preceding claims, wherein the reel handling support (2) comprises a cylindrical and hollow support body (22), and wherein the connection cable (105) runs inside a shielded tube, for example a metal tube, arranged inside the support body (22) until it exits from a connection end (23) .

5. A machine for handling reels of thread (1), comprising a plurality of automatic reading devices (100) according to any one of the preceding claims, in which said machine is a "doffer."

6. An automatic system for tracking a reel of textile thread (1), comprising:
- an automatic reading device (100), according to any one of claims 1 to 4;
- a series of tubes (3) for reels of thread (1), each of said tubes (3) being provided with an RFID label (5).

7. A method for the automatic tracking of reels of thread (1) with tubes (3) provided with an RFID label (5), comprising at least the following steps:
- providing at least one automatic reading device (100), according to any one of claims 1 to 4;
- tracking each reel of thread (1) which is inserted onto the reel handling support (2) by means of a tracking algorithm;
wherein said tracking algorithm is run by a computer and involves at least the following steps:
a- at the start of the loading of the reels of thread (1) on the reel handling support (2), starting a counter that samples the pulses of a clock;
b- while loading the reels of thread (1) on the reel handling support (2), sampling the readings of each RFID label (5) by means of the antenna (110);
c- at the end of the loading of the reels of thread (1) on the reel handling support (2), switching off the counter and dividing the clocks counted in step b by the number of expected reels, and defining clock ranges corresponding to each loaded reel of thread (1).

8. An automatic tracking method according to claim 7, wherein the tracking algorithm also includes the following step, associated with OPTIMAL CONDITION in which the antenna (101) has read only one RFID label (5) in a clock range:
associating the corresponding reel of thread (1) to the clock range, on the basis of the RFID label (5) read.

9. An automatic tracking method according to claim 7 or 8, wherein the tracking algorithm also includes the following step, associated with the IMPERFECT CONDITION in which the antenna (101) has simultaneously read two different RFID labels (5) in the same clock range:
associating the corresponding reel of thread (1) to the clock range by applying at least one of the following corrective logics:
a. acquisition order of the RFID label (5);
b. interval of clocks in which the RFID label (5) was read.

10. An automatic tracking method according to one of claims 7 to 9, wherein the tracking algorithm also includes the following step, associated with the FAULTY OR MISSING RFID CONDITION in which the antenna (101) has not read any RFID label (5) in a clock range:
associating the corresponding reel of thread (1) to the clock range by applying the following corrective logic:
- interval of clocks in which the RFID label (5) is missing.

## Patentansprüche

1. Automatische Lesevorrichtung (100) zum Verfolgen von Fadenspulen (1) mit einem Rohr (3), das mit einem RFID-Etikett (5) versehen ist, umfassend:
- eine Antenne (101);
- ein Lesegerät (102), das mittels eines Verbindungskabels (105) mit der Antenne (101) verbunden ist und dazu geeignet ist, mittels der Antenne (101) Informationen mit einem RFID-Etikett (5) auszutauschen;
- ein elektronisches System (103), das mit dem Lesegerät (102) verbunden ist und eine zentrale Verarbeitungseinheit umfasst;
- einen Spulenhandhabungsträger (2), der mit einer Spitze (21) versehen ist, auf die eine Vielzahl von Fadenspulen (1) mit einem Rohr (3), versehen mit einem RFID-Etikett (5), nacheinander eingeführt werden können, und wobei die Spitze (21) die Antenne (101) ist;
**dadurch gekennzeichnet, dass** die Antenne (101) einen Kopf (110) umfasst, der mit einem inneren Sitz (116) versehen ist, in dem ein Antennenkörper (111) untergebracht ist, wobei der Sitz (116) an der Rückseite durch eine Abschirmung (114) geschlossen ist.

2. Automatische Lesevorrichtung (100) nach Anspruch 1, wobei die Antenne (101) koaxial ist, d.h. dazu ausgelegt ist, Signale in 360° in einer Ebene zu empfangen und auszusenden.

3. Automatische Lesevorrichtung (100) nach Anspruch 1 oder 2, wobei der Kopf (110) aus einem nicht abschirmenden Material, z.B. Kunststoff, und der Schirm (114) aus einem abschirmenden Material, z.B. Metall, hergestellt ist.

4. Automatische Lesevorrichtung (100) nach einem der vorhergehenden Ansprüche, wobei der Spulenhandhabungsträger (2) einen zylindrischen und hohlen Trägerkörper (22) umfasst und wobei das Verbindungskabel (105) innerhalb eines abgeschirmten Rohres verläuft, z.B. eines Metallrohres, das im Inneren des Trägerkörpers (22) angeordnet ist, bis es aus einem Verbindungsende (23) austritt.

5. Maschine zum Handhaben von Fadenspulen (1), umfassend eine Vielzahl von automatischen Lesevorrichtungen (100) nach einem der vorhergehenden Ansprüche, wobei die Maschine ein "Doffer" ist.

6. Automatisches System zum Verfolgen einer Textilfadenspule (1), umfassend:
- eine automatische Lesevorrichtung (100) nach einem der Ansprüche 1 bis 4;
- eine Reihe von Rohren (3) für Fadenspulen (1), wobei jedes der Rohre (3) mit einem RFID-Etikett (5) versehen ist.

7. Verfahren zum automatischen Verfolgen von Fadenspulen (1) mit Rohren (3), die mit einem RFID-Etikett (5) versehen sind, das mindestens die folgenden Schritte umfasst:
- Bereitstellen mindestens einer automatischen Lesevorrichtung (100) nach einem der Ansprüche 1 bis 4;
- Verfolgen jeder Fadenspule (1), die auf dem Spulenhandhabungsträger (2) eingesetzt ist, mittels eines Verfolgungsalgorithmus;
wobei der Verfolgungsalgorithmus von einem Computer ausgeführt wird und mindestens die folgenden Schritte umfasst:
a - zu Beginn des Ladens der Fadenspulen (1) auf den Spulenhandhabungsträger (2), Starten eines Zählers, der die Impulse eines Takts abtastet;
b - während des Ladens der Fadenspulen (1) auf den Spulenhandhabungsträger (2), Abtasten der Werte jedes RFID-Etiketts (5) mit Hilfe der Antenne (110);
c - am Ende des Ladens der Fadenspulen (1) auf den Spulenhandhabungsträger (2) Ausschalten des Zählers und Teilen der in Schritt b gezählten Takte durch die Anzahl der erwarteten Spulen und Definieren von Taktbereichen entsprechend jeder geladenen Fadenspule (1).

8. Automatisches Verfolgungsverfahren nach Anspruch 7, wobei der Verfolgungsalgorithmus auch den folgenden Schritt umfasst, der dem OPTIMALEN ZUSTAND zugeordnet ist, in dem die Antenne (101) nur ein RFID-Etikett (5) in einem Taktbereich gelesen hat:
Zuordnen der entsprechenden Fadenspule (1) zu dem Taktbereich auf der Basis des gelesenen RFID-Etiketts (5).

9. Automatisches Verfolgungsverfahren nach Anspruch 7 oder 8, wobei der Verfolgungsalgorithmus auch den folgenden Schritt umfasst, der mit dem IMPERFEKTEN ZUSTAND verbunden ist, in dem die Antenne (101) gleichzeitig zwei verschiedene RFID-Etiketten (5) in demselben Taktbereich gelesen hat:
Zuordnen der entsprechenden Fadenspule (1) zu dem Taktbereich durch Anwenden mindestens einer der folgenden Korrekturlogiken:
a. Erfassungsreihenfolge des RFID-Etiketts (5);
b. Intervall von Takten, in dem das RFID-Etikett (5) gelesen wurde.

10. Automatisches Verfolgungsverfahren nach einem der Ansprüche 7 bis 9, wobei der Verfolgungsalgorithmus auch den folgenden Schritt umfasst, der mit dem Zustand FEHLERHAFTE ODER FEHLENDE RFID verbunden ist, bei dem die Antenne (101) in einem Taktbereich kein RFID-Etikett (5) gelesen hat:
Zuordnen der entsprechenden Fadenspule (1) zu dem Taktbereich durch Anwendung der folgenden Korrekturlogik:
- Intervall der Takte, in denen das RFID-Etikett (5) fehlt.

## Revendications

1. Dispositif de lecture automatique (100) pour suivre des bobines de fil (1) avec un tube (3) doté d'une étiquette RFID (5), comprenant :
- une antenne (101) ;
- un lecteur (102), connecté à l'antenne (101) au moyen d'un câble de connexion (105), adapté pour échanger des informations avec une étiquette RFID (5) au moyen de l'antenne (101) ;
- un système électronique (103), connecté au lecteur (102), comprenant une unité centrale de traitement ;
- un support de manipulation de bobines (2) doté d'une pointe (21) sur laquelle une pluralité de bobines de fil (1) avec un tube (3) doté d'une étiquette RFID (5) peuvent être insérées les unes après les autres, et dans lequel la pointe (21) est l'antenne (101) ;
**caractérisé en ce que** l'antenne (101) comprend une tête (110) dotée d'un siège interne (116) dans lequel un corps d'antenne (111) est situé, ledit siège (116) étant fermé à l'arrière par un écran (114).

2. Dispositif de lecture automatique (100) selon la revendication 1, dans lequel l'antenne (101) est coaxiale, c'est-à-dire adaptée pour recevoir et émettre des signaux à 360° sur un plan.

3. Dispositif de lecture automatique (100) selon la revendication 1 ou 2, dans lequel la tête (110) est constituée d'une matière ne formant pas blindage, par exemple une matière plastique, et l'écran (114) est constitué d'une matière formant blindage, par exemple du métal.

4. Dispositif de lecture automatique (100) selon l'une quelconque des revendications précédentes, dans lequel le support de manipulation de bobines (2) comprend un corps de support (22) cylindrique et creux, et dans lequel le câble de connexion (105) s'étend à l'intérieur d'un tube blindé, par exemple un tube de métal, agencé à l'intérieur du corps de support (22) jusqu'à ce qu'il sorte d'une extrémité de connexion (23).

5. Machine pour manipuler des bobines de fil (1), comprenant une pluralité de dispositifs de lecture automatique (100) selon l'une quelconque des revendications précédentes, dans laquelle ladite machine est une « peigneuse ».

6. Système automatique pour suivre une bobine de fil (1) textile, comprenant :
- un dispositif de lecture automatique (100) selon l'une quelconque des revendications 1 à 4 ;
- une série de tubes (3) pour des bobines de fil (1), chacun desdits tubes (3) étant doté d'une étiquette RFID (5).

7. Procédé pour le suivi automatique de bobines de fil (1) avec des tubes (3) dotés d'une étiquette RFID (5), comprenant au moins les étapes suivantes :
- la fourniture d'au moins un dispositif de lecture automatique (100) selon l'une quelconque des revendications 1 à 4 ;
- le suivi de chaque bobine de fil (1) qui est insérée sur le support de manipulation de bobines (2) au moyen d'un algorithme de suivi ;
dans lequel ledit algorithme de suivi est exécuté par un ordinateur et implique au moins les étapes suivantes :
a- au début du chargement des bobines de fil (1) sur le support de manipulation de bobines (2), le lancement d'un compteur qui échantillonne les impulsions d'une horloge ;
b- tout en chargeant les bobines de fil (1) sur le support de manipulation de bobines (2), l'échantillonnage des lectures de chaque étiquette RFID (5) au moyen de l'antenne (110) ;
c- à la fin du chargement des bobines de fil (1) sur le support de manipulation de bobines (2), l'extinction du compteur et la division des horloges comptées à l'étape b par le nombre de bobines attendues, et la définition de plages d'horloges correspondant à chaque bobine de fil (1) chargée.

8. Procédé de suivi automatique selon la revendication 7, dans lequel l'algorithme de suivi comporte également l'étape suivante, associée à un ÉTAT OPTIMAL dans lequel l'antenne (101) a lu uniquement une étiquette RFID (5) dans une plage d'horloges :
l'association de la bobine de fil (1) correspondante à la plage d'horloges, sur la base de l'étiquette RFID (5) lue.

9. Procédé de suivi automatique selon la revendication 7 ou 8, dans lequel l'algorithme de suivi comporte également l'étape suivante, associée à l'ÉTAT IMPARFAIT dans lequel l'antenne (101) a lu simultanément deux étiquettes RFID (5) différentes dans la même plage d'horloges :
l'association de la bobine de fil (1) correspondante à la plage d'horloges en appliquant au moins une parmi les logiques correctives suivantes :
a. ordre d'acquisition de l'étiquette RFID (5) ;
b. intervalle d'horloges dans lequel l'étiquette RFID (5) a été lue.

10. Procédé de suivi automatique selon l'une des revendications 7 à 9, dans lequel l'algorithme de suivi comporte également l'étape suivante, associée à l'ÉTAT RFID DÉFECTUEUSE OU MANQUANTE dans lequel l'antenne (101) n'a lu aucune étiquette RFID (5) dans une plage d'horloges :
l'association de la bobine de fil (1) correspondante à la plage d'horloges en appliquant la logique corrective suivante :
- intervalle d'horloges dans lequel l'étiquette RFID (5) est manquante.
